(19) Europäisches Patentamt
European Patent Office
Office européen des brevets

(11) **EP 2 813 782 A1**

(12) **EUROPÄISCHE PATENTANMELDUNG**

(43) Veröffentlichungstag:
**17.12.2014 Patentblatt 2014/51**

(51) Int Cl.:
***F24J 2/32*** *(2006.01)* ***F24J 2/46*** *(2006.01)*

(21) Anmeldenummer: **14002034.8**

(22) Anmeldetag: **13.06.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **13.06.2013 DE 102013009869**

(71) Anmelder: **NARVA Lichtquellen GmbH & Co. KG 09618 Brand-Erbisdorf (DE)**

(72) Erfinder:
• **Fintelmann, Stephan 16356 Werneuchen (DE)**
• **Jack, Steffen 10559 Berlin (DE)**
• **Mientkewitz, Gerhard 09599 Freiberg (DE)**
• **Wagner, Michael 09599 Freiberg (DE)**

(74) Vertreter: **Castell, Klaus et al Patentanwaltskanzlei Liermann - Castell Willi-Bleicher-Strasse 7 52353 Düren (DE)**

(54) **Abschaltender Solarkollektor**

(57) Die Erfindung betrifft einen abschaltenden solar-thermischen Kollektor mit Wärmerohr-Wärmeausleitung, der die maximal im Sammler (5) auftretende Temperatur begrenzt, ohne dass dafür mechanische, elektronische oder sonstige Steuerungsmittel erforderlich sind. Dieser Solarthermie-Kollektor ist auf Grund des Verzichtes auf zusätzliche technische Hilfsmittel für die Temperaturbegrenzung eigensicher. Erfindungsgemäß wird vorgeschlagen, die WärmeÜbertragungswiderstände vom der Absorber-Blech (1) zur KondensatorAußenoberfläche und von der Kondensatoraußenoberfläche in das Arbeitsfluid durch geeignete und erfindungsgemäß benannte Mittel zu minimieren, um steil abfallende Abschaltkennlinien und gute Kollektorerträge zu erhalten. Die Abschalttemperatur kann durch die Wahl der Dosiermenge Verdampfungsfluid vorbestimmt werden.

Figur 1

EP 2 813 782 A1

EP 2 813 782 A1

**Beschreibung**

Die Erfindung betrifft abschaltende Solarthermie-Kollektoren mit Wärmerohr-Wärmeausleitung. Diese abschaltenden Solarthermie-Kollektoren dienen der Sammlung solarer Energie zur Bereitstellung von Wärme für private und gewerbliche Anwendung. Der Wärmetransport bei diesen abschaltenden Solarthermie-Kollektoren erfolgt ausgehend vom Absorber-Blech, dass die solare Energie sammelt und in das Arbeitsfluid, des Wärmerohres abgibt. Ein Wärmerohr besteht aus dem die Wärme übernehmenden Verdampfer, einem Verbindungskanal und einem Kondensator. Die Kondensatoren befinden sich in Steckhülsen eines Sammlers oder anderen Vorrichtungen, welche die Wärme "trocken" auf den Sammler übertragen. Die Wärme wird dann vom Sammler in das darin strömende Arbeitsfluid weitergeleitet. Eine andere Möglichkeit ist, dass die Wärme direkt in das von den Kondensatoren umspülte Arbeitsfluid übertragen wird.

Solarthermie-Kollektoren dienen der Sammlung solarer Wärmeenergie zu privaten und gewerblichen Zwecken. Die Wirkungsgrade der Kollektoren bezogen auf die Bruttofläche, überstreichen einen Bereich zwischen 10% und 80% der eingestrahlten solaren Energie. Dabei hängt der Wirkungsgrad stark von der Arbeitstemperatur und der Qualität der Isolation des Kollektors ab. Während Flachkollektoren recht hohe Wirkungsgrade bei geringen Temperaturdifferenzen zur Umgebungstemperatur aufweisen, sind Vakuum-Röhrenkollektoren auf Grund ihrer sehr guten Isolierung bei Temperatur-Differenzen oberhalb von 25 K Differenz zur Umgebungstemperatur deutlich effektiver und werden deshalb vorzugsweise für Anwendungen mit höheren Nutztemperaturen bzw. Wärmebedarf in den Übergangszeiten Herbst und Frühjahr genutzt.

Problematisch bei direkt durchströmten Systemen ist z. B, dass bei größeren Anlagen auf Grund ungleichmäßiger Durchströmung des Solarfeldes sich Teilbereiche mit geringerer Durchströmung so stark erhitzen, dass das Fluid verdampft. Diese partiellen Stagnationen führen neben Ertragsminderungen zu Schwankungen im Volumenstrom, die bis zur Abschaltung der Anlage führen können.

Eine weitere kritische Situation entsteht, wenn bei Sonnenschein die Wärmeentnahme unterbrochen wird. Stagnation kann in den Sommermonaten in der Anlage ein typischer Betriebszustand sein und tritt auf, wenn die Wärmespeicher der Anlage voll beladen sind und damit keine Wärme mehr von den Kollektoren abgenommen werden kann. Stagnation kann auch durch Ausfall von Pumpen oder durch geplante oder zufällige Unterbrechung der Produktion verursacht sein. Bei direkt vom Arbeitsfluid durchströmten Kollektoren stagniert in diesem Fall das gesamte Kollektorfeld und die Absorber-Flächen erreichen Temperaturen bis ca. 200°C bei Flachkollektoren und 300°C bei Vakuumröhrenkollektoren. Es müssen deshalb für diesen Betriebszustand Vorkehrungen technischer und organisatorischer Art getroffen werden, um Gefahren für Menschen und die Anlage abzuwenden.

So gibt es aufwendige Lösungen zur Vermeidung hoher Temperaturen im Falle der Stagnation, wie zum Beispiel zusätzliche Kühlkreise in der Anlage. Bei Anlagen ohne Stagnationsschutz, was der übliche Fall ist, liegt eine sehr hohe thermische Belastung für das Arbeitsfluid und die Anlagenkomponenten vor. Folgen sind hohe Wartungskosten, da je nach Qualität des Arbeitsfluid dieses regelmäßig erneuert und auch eine Reinigung der Anlage erfolgen muss.

Ein geeignetes Mittel diese Problematik zu beherrschen, ist die Ausleitung der gesammelten Wärme von den Absorber-Blechen mittels Wärmrohren. Wärmerohre haben folgende Vorzüge:

- Das Arbeitsfluid durchströmt nur die Sammler der Kollektoren (geringere Menge an Arbeitsfluid).

- Der Strömungswiderstand in einem Wärmerohr-Sammler ist deutlich niedriger als bei direkt durchströmten Systemen, wodurch gleichzeitig eine einfache hydraulische Verschaltung (nur Sammlerrohr) im Kollektor vorliegt, wodurch eine vereinfachte Hydraulik des Kollektorfeldes realisiert werden kann.

- Es gibt keine partiellen Stagnationen

- Durch Wahl von Art und Menge eines geeigneten Verdampfungsfluides im Wärmerohr kann die Temperatur im Sammler begrenzt werden, wodurch Frostschutzmittel nicht geschädigt werden. Querschnittsverengungen und Verstopfungen treten nicht auf.

Bei Solarthermie-Kollektoren mit Wärmerohr- Wärmeausleitung wird die solar auf den Absorber-Blechen gesammelte Wärme dem Verdampfer des Wärmerohres zugeführt. Dies geschieht durch Wärmeleitung über das Absorber-Blech und die Wandung des üblicherweise als Rohr ausgebildeten Verdampfers in das sich im Verdampfer befindliche Verdampfungsfluid. Das Verdampfungsfluid verdampft entsprechend der Wärmezufuhr partiell und strömt über einen Verbindungskanal vom Verdampfer zum Kondensator. Im Kondensator kondensiert der Dampf wieder und das nun flüssige Verdampfungsfluid strömt auf Grund von Schwerkraftwirkung zurück zum Verdampfer. Der Rückfluss wird erreicht, indem die Wärmerohre so angeordnet sind, dass der Kondensator sich über dem Bereich des Verdampfers befindet. Die damit vom Wärmerohr vom Verdampfer zum Kondensator transportierte Wärme wird durch Konvektion und Wärmeleitung über den Sammler in das Arbeitsfluid der Solaranlage übertragen.

Gefährliche Betriebszustände durch zu hohe Temperaturen und dadurch bewirkte Dampfbildung im Arbeitsfluid werden vermieden, in dem ein "Abschalten" der Wärmeübertragungsfunktion der Wärmrohre ab einer bestimmten Temperatur herbeigeführt wird. Dazu wird der Wärmestrom durch gezielte Austrocknung des Wärmerohres oberhalb einer vorgegebenen Temperatur unterbrochen. Dieser Effekt wird erreicht, indem genau so viel Verdampfungsfluid in das Wärmerohr eingebracht wird, dass bei der Abschalttemperatur, $\theta ab$, das gesamte Verdampfungsfluid verdampft ist.

Mit steigender Arbeitstemperatur verdampft immer mehr Verdampfungsfluid und steht somit nicht mehr für einen Wärmetransport zur Verfügung. Bei der Knicktemperatur, $\theta k$, ist gerade noch so viel Verdampfungsfluid flüssig, dass der gesamte Verdampfer des Wärmerohres gekühlt wird. Steigt die Temperatur im Wärmerohr weiter über die Knicktemperatur hinaus an, entwickelt sich eine Austrocknungs-Zone, die am unteren Ende des Wärmerohres beginnt und sich immer weiter nach oben vergrößert.

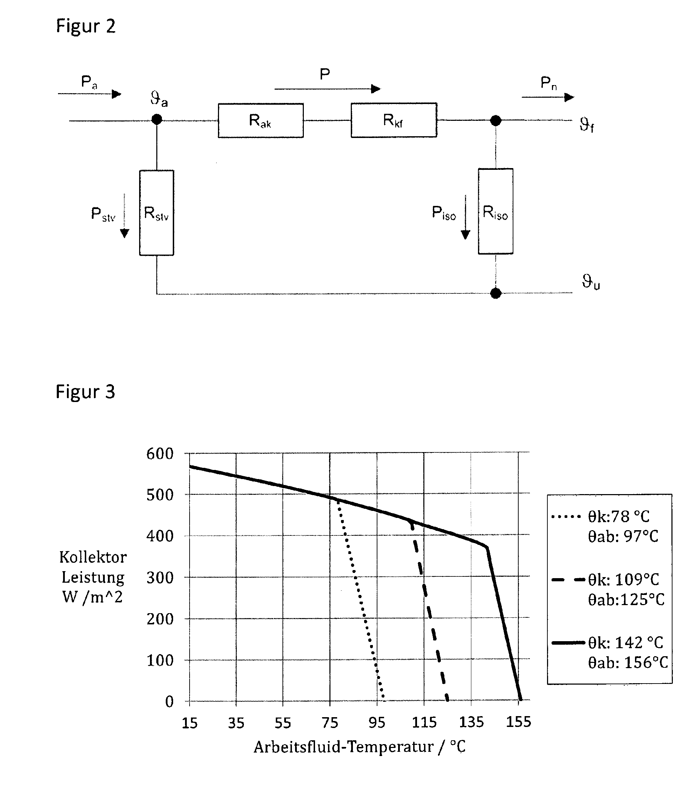

Der Grund für dieses Verhalten ist, dass bei Temperaturerhöhung über die Knicktemperatur hinaus weitere Anteile des Verdampfungsfluides verdampfen und somit nicht mehr für die Kühlung des Verdampfer-Bereiches bzw. für den Wärmetransport zum Kondensator zur Verfügung stehen. Dadurch verkleinert sich der gekühlte Verdampfer-Bereich. Bei der Abschalttemperatur, $\theta ab$, (Figur 3) ist das Verdampfungsfluid vollkommen verdampft, wodurch ein Wärmestrom vom Verdampfer zum Kondensator über den zweiphasigen Kreisprozess des Verdampfungsfluides im Wärmerohr nicht mehr möglich ist.

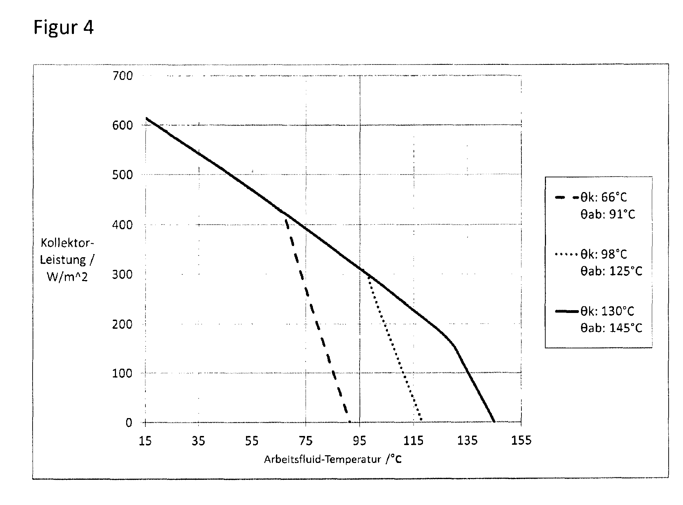

In diesem Zustand ist das Wärmerohr abgeschaltet. Der Kollektor besitzt folglich zwei abzugrenzende Bereiche (Figur 3, Figur 4):

- Arbeitstemperaturbereich: Kennlinienabschnitt des Wirkungsgrades bzw. der Nutzleistung zwischen Umgebungstemperatur, $\theta u$, und der Knicktemperatur, $\theta k$,

- Austrocknungszone: Kennlinienabschnitt zwischen Knicktemperatur, $\theta k$ und Abschalttemperatur, $\theta ab$.

Im Stand der Technik gibt es eine Reihe von Lösungen zur Begrenzung der Stagnationstemperatur von Solarthermie-Kollektoren. Der Vollständigkeit halber werden einige solche Abschaltungslösungen aufgeführt.

In DE 199 19 835 A1 wird ein doppelwandiges Absorber-Rohr beschrieben, indem durch eine mechanische Vorrichtung das innere Rohr, das die AbsorberSchicht trägt, im Falle der Stagnation aus dem Bereich der höchsten solaren Einstrahlung mechanisch durch Bimetall-Wirkung herausführt.

Bekannt ist EP 1 970 642 A2. In diesem Patent wird im Hauptanspruch ein System geschützt, bei dem die Kollektoren zur Temperaturregulierung durch bewegliche Flächen gegen die Sonne abgeschattet werden können.

Die Steuerung erfolgt über ein thermo-hydraulisches System, dass die Temperatur im Arbeitsfluid misst.

Nach der Lehre in Patent DE 2008 038 733 B4 wird der Arbeitsfluidkreislauf der Kollektoranlage mittels Drucksensoren überwacht. Steigt der Druck im System, wird auf unerwünschte Dampferzeugung geschlossen. In diesem Fall wird die Umwälzpumpe abgeschaltet und gegen Wiedereinschalten gesperrt, solange Dampf im Arbeitsfluid-Kreislauf feststellbar ist.

Bekannt ist z.B. nach der österreichischen AT 300 972, vom 15. Mai 1970 ein Wärmerohr bei dem durch ein Steuermittel das Kondensat an der kalten Stelle (Kondensator) zurückgehalten werden kann. Darüber hinaus wird in einem Unteranspruch die Unterbrechung des Wärmetransportes dadurch realisiert, in dem der Kondensatorbereich eine Ausbuchtung erhält, die das gesamte Verdampfungsfluid aufnehmen kann. Im Falle der gewünschten Wärmezufuhr-Unterbrechung wird das Wärmerohr in seiner Längsachse so gedreht, dass die Ausbuchtung unten ist, das Kondensat in diese Ausbuchtung fließt und somit nicht mehr für den Wärmetransport zur Verfügung steht.

Bekannt ist nach DE 0069 102856 T2 eine Ausführung eines abschaltenden Solarthermie-Kollektors mit Wärmerohren, bei welcher der Wärmetransport oberhalb einer definierten Temperatur dadurch verhindert wird, indem über in den Kondensatoren der Wärmerohre eingebaute Vorrichtungen das Verdampfungsfluid in den Kondensatoren zurückhalten.

Gleichzeitig sammelt sich das Fluid in den Kondensatoren und steht dadurch nicht mehr als Verdampfungsfluid zur Verfügung.

Eine Realisierung dieses Prinzips ist der Schrift der Firma Thermomax "Evacuated Solar Energie Collector"-Technical Reference & Installations Manual (URL: http://www.thermomax.com/Downloads/Thermomax%20Handbook.pdf) zu entnehmen, bei dem die Wärmerohre des Solarkollektors Kondensatoren mit thermisch gesteuerten Ventilen enthalten.

Nachteilig bei allen aufgeführten Lösungen ist, dass Mess- und Steuerelemente in Verbindung mit Ventilen oder anderen mechanischen Bauteilen erforderlich sind, um eine Abschaltung zu realisieren. Eigensicherheit des Kollektors bzw. Kollektorfeldes wird nicht erreicht, da generell mit einem Ausfall solcher Elemente zu rechnen ist.

Alle beschriebenen Lösungen sind aufwendig und störanfällig und somit auch nicht eigensicher. Gesucht werden deshalb andere technische Ausführungen, bei denen zusätzliche Elemente vermieden werden und keine mechanischen Bewegungen erforderlich sind.

Bekannt ist das Gebrauchsmuster DE 20108 682 U1, indem eine Wärmeausleitung mit Wärmerohren bei Vakuumrohren nach dem Thermoskannen-Prinzip geschützt ist. Diese Vakuumrohre sind doppelwandig. Der Zwischenraum zwischen Innen- und Außenrohr ist evakuiert, wobei sich das Absorber-Material auf der Außenseite des Innenrohres, also im Vakuum befindet. In einem Unteranspruch wird die Möglichkeit einer Abschaltung im Temperaturbereich zwischen 170°C und 190°C durch Begrenzung der Menge des dosierten Verdampfungsfluides geschützt.

Nachteilig bei der Lösung nach DE 20108 682 U1 ist, dass sowohl keinerlei Angaben über die Art des Verdampfungsfluides bzw. dessen Menge als auch dessen Arbeitstemperaturbereich bzw. die Knicktemperatur gemacht werden. Bekannt sind nach Gebrauchsmuster DE 20 2008 007 647 U1 "Heatpipe zur Wärmeübertragung in der Solarthermie" Wärmerohre für Solarthermie-Kollektoren, die mit definierten Mengen an organischen Verdampfungsfluid gefüllt sind und ohne mechanische, störanfällige Ventile die Kollektoren oberhalb einer vorbestimmten Temperatur abschalten. Diese Wärmerohre sind auf Grund ihres organischen Verdampfungsfluides froststabil. Die Abschalttemperatur des Arbeitsfluides solcher Kollektoren liegt bei 160°C. Die Kollektoren sind eigensicher.

Nachteilig bei dieser Lösung ist, dass die Knicktemperatur, $\theta k$, je nach Leistung und technischer Ausführung der Sammler bzw. der Wärmerohre der Kollektoren trotz der hohen Abschalttemperatur von 160°C bei nur 60°C bis 85 °C liegt. Durch die geringe Steilheit der Abschaltkennlinie tritt eine erhebliche und in sehr vielen Anwendungsfällen nicht tolerierbare Einschränkung des optimal nutzbaren Arbeits-Temperatur-Bereiches zwischen Umgebungstemperatur und Knicktemperatur ein. Abschalttemperaturen unter 100°C, wie sie speziell in mediterranen Gegenden gefordert werden, sind auf diese Weise nicht realisierbar.

Auch im nördlichen Europa tritt insbesondere bei Anlagen, welche die Heizung unterstützen, im Sommer betriebsmäßig Stagnation mit allen bekannten Nachteilen auf. Ein System, das maximale Sammlertemperaturen von 120°C bis 130°C bei einer maximalen Speichertemperatur von 90°C bis 95°C zulässt, wäre vorteilhaft, da Frostschutzmittel bei 130°C sehr stabil sind und kaum der Alterung mit allen Nachteilen unterliegen. Auch eine Dampferzeugung könnte durch eine Druckhaltung, Nenndruck 6 bar, leicht vermieden werden.

Bekannt ist die Offenlegungsschrift DE 10 2010 052 103 A1. In diesem Schutzrecht wird das Verhalten des Sammlers nach Abschalten, also dem vollständigem Verdampfen des Verdampfungsfluides, untersucht. In dem Schutzrecht wird die Wirkung der Wärmeleitung im Metall, des häufig aus Kupfer hergestellten Wärmerohres, auf die Endtemperatur des Sammlers im Stagnationsfall untersucht. Zur Erreichung einer Temperaturbegrenzung wird ein bestimmtes Verhältnis zwischen dem thermischen Widerstand der Verbindung von Verdampfer zum Kondensator (Sammler) und dem thermischen Widerstand der Sammlerisolierung gefordert und geschützt.

Nachteilig bei dieser Lösung ist, dass keine genauen Angaben über den Wärmestrom im Falle der Stagnation über das Metall des Wärmerohres getroffen werden und dass das Auslegungsverfahren zu keiner signifikanten Minderung der Differenz zwischen Knicktemperatur und Abschalttemperatur führt. Darüber hinaus können Möglichkeiten, dass ohne Einhaltung der vorgeschriebenen Wärme-Widerstands-Verhältnisse zwischen Verbindungskanal und Sammlerisolation fest definierte Abschaltungstemperatur erreicht werden können, nicht genutzt werden.

Noch nicht angesprochen wurde, dass Wärmerohre auch Nachteile besitzen können:

-   Der Wirkungsgrad und der Ertrag sind bei identischer Absorber-Fläche etwas niedriger als bei den direkt durchströmten Systemen
-   Der optimale Arbeitsbereich kann bei höheren Arbeits-Temperaturen eingeschränkt sein.
-   Wärmeleitpaste härtet aus und bewirkt erhebliche Wirkungsgradminderungen, da sich mit der Aushärtung der thermische Widerstand der Paste erhöht.

Mittels Messungen und Berechnungen konnten die Einflüsse der einzelnen thermischen Systemwiderstände auf Wirkungsgrad, Ertrag eines Kollektors und auf das Verhalten der Abschaltkennlinie ermittelt werden.

In Figur 2 ist das Ersatzschaltbild für den stationären Zustand eines abschaltenden Solarthermie-Kollektors dargestellt. Auf Basis dieses Ersatzschaltbildes wurden nachstehende Beziehungen ermittelt:

Nach Gleichung (1) ergibt sich *Pn,* die Nutzleistung, wie folgt:

$$Pn = Gs * Aa * \tau * \alpha - (Aa * \varepsilon a + Ac * \varepsilon c) * 6 * (Ta^4 - Tu^4) - Riso * (\theta s - \theta u)$$

(Gl. 1)

mit

$$Ta = \qquad 273\,K + \theta f + Pn * (Rak + Rkf) \qquad \text{(Gl. 2)}$$

| | |
|---|---|
| Gs, | solare Einstrahlung W/m² |
| Aa | Absorber-Fläche auf m² Bruttofläche bezogen; |
| $\tau$ | Transmissionsgrad des Hüllrohres; |
| $\alpha$ | Absorptionskoeffizient; |
| $\varepsilon a$, $\varepsilon c$ | Emissionskoeffizienten für Absorber-Fläche und blanke Kupferoberflächen; |
| Aa, Ac | Absorber- und Kupferfläche pro m² Bruttofläche; |
| 6 | Strahlungskoeffizient; |
| Ta | absolute Absorber-Flächentemperatur; |
| Tu | absolute Umgebungstemperatur; |
| Riso | Isolationswiderstand eines Sammlers; |
| $\theta s$, $\theta f$, $\theta u$ | Arbeitsfluid- Sammler- u. Umgebungstemperatur; |
| Pn | Nutzleistung W/m² Bruttofläche; |
| Rak | Wärme-Übertragungs-Widerstand Absorber-Kondensatoroberfläche, |
| Rkf | Wärme-Übertragungs-Widerstand Kondensator-Arbeitsfluid. |

Das Gleichungssystem aus Gleichungen (1) und (2) kann sowohl geschlossen oder auch iterativ nach der Nutzleistung, Pn gelöst werden.

Der Wirkungsgrad des Kollektors, auf die Bruttofläche bezogen, ergibt sich aus Gleichung (3).

$$\eta = \frac{Pn}{Gs} \qquad \text{(Gl. 3)}$$

Aus den Gleichungen ist erkennbar, dass die beiden Wärmeübertragungs-Widerstände *Rak* und *Rkf* die Nutzleistung und den Wirkungsgrad des Kollektors mindern. Für einen hohen Ertrag sollten folglich die beiden Widerstände durch technische Maßnahmen so klein wie möglich sein.

Unter der Annahme die Übertragungs-Widerstände seien Null, ergibt sich das Verhalten eines direkt durchströmten Systems. Die Gleichungen (Gl. 1) bis (Gl. 3) beschreiben das Verhalten eines Kollektors mit Wärmerohr-Wärmeausleitung in Abhängigkeit von der Arbeitstemperatur, $\theta f$, bei dem die Austrocknung noch nicht begonnen hat.

Mit Beginn der Austrocknung bei der Knicktemperatur, $\theta k$, zeigt der Kollektor ein vollkommen anderes Verhalten. Nun bestimmen nicht mehr die absorbierte solare Strahlung bzw. die Verluststrahlung die Nutzleistung im System. Die Nutzleistung, *Pnt,* in der

Austrocknungs-Zone hängt nun ausschließlich vom Austrocknungszustand des Wärmerohres ab (4) und ergibt sich nach Gleichung (4) zu:

$$nt = \frac{\theta ab}{Rak + Rkf} - \frac{\theta f}{Rak + Rkf} \qquad \text{(Gl. 4)}$$

Die Gleichung (Gl. 4) ist eine Geradengleichung, die bei $\theta f = 0$ die Ordinate schneidet. Die Leistung erreicht den Wert Null, wenn $\theta f = \theta ab$ ist. Dabei ist $\theta ab$ die Temperatur, bei der das Wärmerohr keine Leistung mehr über den zwei Phasenprozess überträgt. Das Wärmerohr ist "abgeschaltet".

Bei genauer Rechnung sind noch Einflüsse auf die sich einstellende Abschalttemperatur durch den Wärmeverluststrom des Sammlers zur Umgebung und den geringfügigen Wärmetransport im Metall des Wärmerohres zu beachten. Der Wärmestrom des Sammlers zur Umgebung durchströmt den Isolationswiderstand, *Riso,* und folgt der Temperaturdifferenz zwischen Sammler- und Umgebungstemperatur. In diesem Zusammenhang wird auf Figur 4 verwiesen. Auf den Wärmestrom im Metall des Wärmerohres nach dem "Abschalten" des Wärmerohres wird weiter unten eingegangen.

Gleichung (Gl. 4) zeigt, dass die beiden Wärme-Übertragungs-Widerstände die Neigung der Abschaltkennlinie stark beeinflussen. Will man eine steile Abschaltkennlinie realisieren, um einen großen ungestörten Arbeitsbereich zu erhalten, muss durch technische Maßnahmen die Summe dieser Widerstände minimiert werden.

Eine Minimierung dieser thermischen Widerstände bei gleichzeitig genau auszulegender und zu dosierender Menge an Verdampfungsfluid führt zu einem kleinen Temperaturbereich der Abschaltkennlinie und zu der gewählten Maximaltemperatur des Sammlers an diesem Kollektor. Die steile Abschaltkennlinie und die Begrenzung der Maximaltemperatur werden bei niedrigen Wärme-Übertragungswiderständen, ohne die Verwendung von Ventilen oder weiterer Hilfsmittel erreicht, was eine eigensichere, die Stagnationstemperatur begrenzende Kollektortechnologie ohne negativen Einfluss auf den Arbeitsbereich bedeutet. Selbst bei Zerstörung von Elementen der Anlage wird diese Maximaltemperatur nicht überschritten.

Aus den Gleichungen (Gl. 1) und (Gl. 2) ist ersichtlich, dass auch die Nutzleistung bzw. der Wirkungsgrad nach Beziehung (Gl. 3) stark von den Übertragungswiderständen zwischen Absorber und Arbeitsfluid abhängen. Damit ist die Erreichung möglichst kleiner Wärme-Übertragungs-Widerstände von ausschlaggebender Bedeutung, um einen möglichst hohen solaren Ertrag und einen entsprechenden Wirkungsgrad zu erreichen.

Eine Analyse der Widerstände zwischen Absorber und Kondensator-Außenoberfläche, *Rak,* ergab, dass der thermische Widerstand der Kondensation die sonstigen Widerstände, die in dem Widerstand *Rak* enthalten sind, wie Wärmeübertragungen durch Metall oder der Widerstand des Dampftransports deutlich dominiert. Deshalb ist eine Konzentration auf den Kondensations-Widerstand sinnvoll.

Werden die erforderlichen Kondensations-Bedingungen für eine gute Wärmeübertragung mit geringer Temperaturanhebung analysiert, erkennt man, dass das Verdampfungsfluid und der Kondensator folgende Eigenschaften aufweisen sollten:

- Die Wärmeleitfähigkeit des Verdampfungs-Fluides sollte so groß wie möglich sein, da der Wärmestrom die Kondensat-Schicht im Kondensator durchströmt.

- Die Viskosität des Verdampfungs-Fluides sollte klein sein, damit nur dünne Kondensat-Schichten zu durchströmen sind.

- Die Verdampfungsenthalpie des Fluids sollte so groß wie möglich sein, da dann geringe Mengen Verdampfungsfluid für den Wärmetransport benötigt werden (dünne Verdampfungsfluid-Schichten).

- Der Kondensator sollte eine ausreichend große, die Wärme gut abführende Kondensationsoberfläche besitzen.

- Die Kondensationsflächen sollten ausreichend glatt und so gestaltet sein, dass das kondensierte Verdampfungsfluid gut abfließen kann.

- In analoger Weise wurde auch der Wärmeübertragungs-Widerstand, *Rkf,* der Widerstand der Kondensator-Außenoberfläche zum Arbeitsfluid, untersucht. Um diesen Widerstand zu minimieren, der auch eine Reihe von Einzelwiderständen umfasst, sind folgende Maßnahmen erforderlich bzw. möglich:

- Ein guter, großflächiger Kontakt zwischen Kondensator und Sammler (Trockenanbindung)

- Eine gut die Wärme leitende Wärmeleitpaste, die auch in 20 Jahren trotz Temperaturbelastung ihre Eigenschaften behält.

- Ein die Wärme gut leitendes Fügeverfahren, welches zur Minimierung des Übertragungswiderstandes zwischen Kondensator und Sammler führt.

- Eine ausreichend hohe Reynolds-Zahl

- Im Falle der direkten Kondensator Umspülung ist die Erreichung einer ausreichend hohen Reynolds-Zahl von ausschlaggebender Bedeutung, da in diesem Fall die Wärmeübertragung ausschließlich über die Kondensator-Außenoberfläche erfolgt.

- Dies kann durch einen entsprechend hohen Volumenstrom des Arbeitsfluides, durch Oberflächengestaltung durch die Reynolds-Zahl erhöhende Mittel wie Einbauten im Sammler, Oberflächenstrukturen des Sammlers

Erfindungsgemäß werden die Nachteile der bekannten Lösungen durch eine Neugestaltung des eigensicheren solar-thermischen Kollektors entsprechend der Schutzansprüche gelöst.

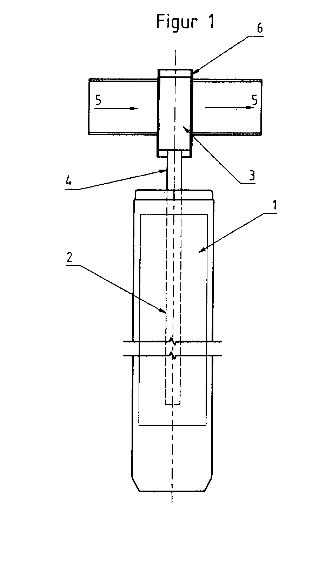

Es wird von einem abschaltenden solar-thermischer Kollektor zum Sammeln thermischer Energie der Sonne ausgegangen, bei dem der Wärmetransport von den Absorber-Flächen 1, siehe Figur 1, zum Arbeitsfluid im Sammler 5 des Kollektors über Wärmerohre erfolgt. Bei diesen Kollektoren wird die Wärmezufuhr zum Arbeitsfluid oberhalb einer bestimmten Abschalttemperatur dadurch verhindert, in dem eine solche Menge des Verdampfungsfluides in die einzelnen Wärmerohren dosiert wird, dass bei der Abschalttemperatur, der Temperatur bei der keine Wärme mehr transportiert werden soll, in den Wärmerohren gerade die gesamte Menge des Verdampfungsfluides verdampft ist. Die Wärmerohre sind folglich bei und oberhalb dieser Temperatur ausgetrocknet und können deshalb auch keine Wärme mehr über Verdampfung und erneute Kondensation zum Sammler transportieren.

Entscheidend bei dieser Vorgehensweise ist, dass die Differenz zwischen der Knicktemperatur, $\theta k$, der Temperatur bei welcher der Austrocknungsvorgang des Wärmrohres beginnt und der Abschalttemperatur, $\theta ab$, auf unter 25 K reduziert ist. Eine Abschaltung innerhalb eines solch kleinen Temperaturbereiches bedeutet Vorteile in Hinsicht auf die Größe des von der Abschaltung nicht beeinflussten optimalen Leistungsbereiches des Kollektors bei gleichzeitig relativ niedriger Abschalttemperatur. Dieses vorteilhafte Verhalten des Kollektors wird erreicht, indem die Summe der Wärme-Übertragungswiderstände zwischen den Verdampfern 2 der Wärmerohre und dem Arbeitsfluid im Sammler 5 ein minimales Maß erreicht. Dazu ist es erforderlich, dass die Wärmerohre und die Sammler hohe Wärme-Übertragungsleistung und damit Wärmewiderstände $Rak$ und $Rkf$ (vergleiche Figur 2) besitzen. Vorzugsweise sollte der Gesamtleitwert der Übertragung Verdampfer- Arbeitsfluid einer Absorber-Wärmerohr-Einheit 3,35 W/K nicht unterschreiten bzw. der Gesamtwiderstand 0,3 K/W nicht überschreiten.

Zur Gewährleistung dieser hohen Übertragungsleistungen bzw. der angestrebten niedrigen Summe der Übertragungswiderstände müssen zum Einen die einzelnen Wärmewiderstände zwischen Absorber-Fläche und Außenoberfläche des Kondensators 3 so erniedrigt werden, dass der geforderten hohe Wärmeleitwert des Gesamtübertragungs-Weges erreicht wird.

Mittel dazu sind, dass der thermische Gesamtwiderstand zwischen der Wärmquelle, dem Absorber-Blech **1** und der Kondensator **3**-Außenoberfläche durch ein geeignetes Fügeverfahren wie div. Schweißverfahren, Lötung oder mechanische Fügeverfahren mit Wärmeübertragungshilfen vernachlässigbar klein gestaltet wird. Die Querschnitte des Verdampfers **2,** die das verdampfte Fluid, bei der Wärmeübertragung vom Verdampfer **2** über den Verbindungskanal **4** zum Kondensator 3 durchströmen, so bemessen sind, dass auch der durch den Druckabfall bewirkte thermische Widerstand von Verdampfer 2 und Verbindungskanal **4** zum Kondensator 0,05 K/W nicht überschreiten. Als zweite Voraussetzung ist es erforderlich, dass als Verdampfungsfluid in den Wärmerohren ein thermisch und chemisch stabiles organisches Verdampfungsfluid genutzt wird, dass Eigenschaften wie gute Wärmeleitfähigkeit, geringe Viskosität und eine relativ große Verdampfungsenthalpie besitzt, um den thermischen Widerstand des Wärmerohres zu minimieren. Entsprechend der Zielvorgabe muss das Verdampfungsfluid es im Wärmerohr zwischen 90°C und 180°C bei angemessener dosierter Menge verdampft sein, wobei n-Pentan, Aceton oder Methanol vorzugsweise anzuwenden sind.

Eine dritte Voraussetzung ist, dass die inneren Oberflächen der Kondensatoren, beispielsweise durch Ausbildung von Rippen innerhalb der Kondensatoren so vergrößert sind, dass an den Innenflächen der Kondensatoren kondensierendes Verdampfungsfluid nur dünne Schichten bildet und ungestört zurück in die Verdampfer fließen kann. Durch diese Gestaltung des Innenraumes der Kondensatoren in Verbindung mit den oben erwähnten Eigenschaften des Verdampfungsfluides wird erreicht, dass der Temperaturabfall auf Grund des Wärmestromes durch die kondensierte Fluidschicht klein ist und ein geringer Wärmeübertragungswiderstand erzielt wird. Naturgemäß muss auch der Kondensator aus einem die Wärme gut leitendem Material gefertigt sein, um die Wärme mit vernachlässigbarem Temperaturabfall von den Rippen bzw. von und durch die Kondensator-Wandung an die Kondensator-Außenoberfläche zu übertragen. Dabei sollte der Widerstand zwischen Absorber-Blech 1 und Kondensator-Außenoberfläche 0,15 K/W nicht übersteigen.

Auch der Übertragungswiderstand der Wärme auf dem Weg von der Kondensator-Außenoberfläche in das Arbeitsfluid muss je nach technischer Ausführung so gestaltet sein, dass dieser Widerstand 0,2 K/W pro Wärmerohr nicht überschreitet. Dabei gilt es die direkte Umspülung des Kondensators von der Trockenanbindung zu unterscheiden.

Bei der direkten Umspülung des Kondensators durch das Arbeitsfluid, bei welcher der Kondensator quer in den Sammler ragt, spielt die Größe der Außenoberfläche eine wichtige Rolle. Sie muss angemessen groß sein. In Verbindung mit der Gestaltung des Sammlers **5** und einem angemessen Arbeitsfluid-Volumenstrom sollte eine Reynolds-Zahl von 1500 - 3000 nicht unterschritten werden.

Im Falle der Trockenanbindung gestaltet man die Kontaktfläche zwischen Kondensator-Außenoberfläche und dem Sammler in der Form als Steckhülse oder Klemmsammler ausreichend groß. Die mittlere Spaltgröße der Kontaktfläche sollte unter 0,1 mm liegen und mit einer auch bei höheren Temperaturen und langer Nutzungsdauer nicht aushärtenden Wärmeleitpaste auf Basis von Graphit und einem Mineralöl mit niedrigem Dampfdruck zu mindestens 40% gefüllt sein.

Der Sammler wird aus einem die Wärme gut leitenden Material gefertigt, da nicht nur die Steckhülse bzw. die Klemmverbindung, sondern auch die gesamte innere Oberfläche des Sammlers zu einer guten Wärmeübertragung in das Arbeitsfluid beitragen. Vorzugsweise sind Kupfer, Aluminium, oder Eisen anzuwenden.

Der thermische Gesamtübertragungs-Widerstand Kondensator-Außenoberfläche in das Arbeitsfluid für den Wärmestrom einer Absorber- Wärmerohr-Einheit sollte 0,2 K/W nicht überschreiten.

Auch unlösbare die Wärme gut leitende Verbindungen zwischen Kondensator und Sammler sind für eine angemessen gute Wärmeübertragung gut geeignet, da sie das Problem des Wärmewiderstandes im Spalt vermeiden.

**ANWENDUNGSBEISPIELE**

**Beispiel 1 Vakuumröhrenkollektor mit Wärmerohr-Wärmeausleitung**

Nachfolgend wird von einem Vakuum-Rohr-Kollektor mit Wärmerohr-Wärmeausleitung ausgegangen. Die angegebenen Ergebnisse sind generell auf die Bruttofläche (Länge x Breite des Kollektors) normiert, um eine Vergleichbarkeit mit anderen Kollektoren zu erhalten.

| | |
|---|---|
| Solare Einstrahlung | 1000 W/m$^2$ |
| Anzahl der Rohre pro Kollektor | 10 |
| Vakuum-Rohrdurchmesser | 56 mm |
| Abstand der Vakuumrohre | 66 mm |
| Gesamtbreite | 0,65 m |
| Gesamtlänge mit Sammler | 2,14 m |
| Gesamtabsorber-Fläche | 0,911 m$^2$ |
| Absorber-Material | TiNOX auf Kupferblech |
| Bruttofläche des Kollektors | 1,39 m$^2$ |
| Isolationswiderstand des Sammlers | 12,5 K/W |
| Wärme-Übertragungswiderstand Absorber- Kondensator, *Rak* | 0,12 K/W |
| Wärme-Übertragungswiderstand Kondensator - Arbeitsfluid, *Raf* | 0,18 K/W |

Zur Realisierung der gewünschten steilen Abschaltkennlinie und einer hohen Nutzleistung bzw. einem hohen Wirkungsgrad wurden folgende Maßnahmen getroffen:

**Widerstand *Rak***

Verwendet wurde als Verdampfungsfluid Aceton. Der bisher erreichte thermische Widerstand des Wärmerohres, *Rak,* konnte durch Verwendung eines Rippenkondensators mit Innenrippen und einer Kondensationsoberfläche von 105 cm$^2$ auf *Rak:* 0,12 K/W gesenkt werden.

**Widerstand *Rkf***

Als Sammler wurde ein Steckhülsensammler aus Kupfer eingesetzt. Hauptrohr 42 mm x 1,5 mm, Steckhülsen di: 22 mm, da: 24 mm, mittlere Spalttoleranz 0,1 mm mit Graphit-Wärmeleitpaste), Widerstand *Rkf:* 0,18 K/W

**Ergebnisse**

In Figur 3 sind die Ergebniskennlinien dargestellt. Alle Ergebnisse sind auf 1 m$^2$ Bruttofläche bezogen.
Es liegt eine relativ flache Kennlinie in Abhängigkeit von der Arbeitstemperatur vor. Am Knickpunkt der Abschaltkennlinie (142°C) werden noch 65% der Anfangsleistung bei Umgebungstemperatur erreicht. Die Abschaltkennlinien sind sehr steil, so dass beispielsweise für eine Nennabschalt-Temperatur von 130°C, eintretende Abschalttemperatur 125°C, der Knickpunkt bei 109°C liegt. Der zugehörige Dampfdruck für Wasser liegt bei 2,4 bar, so dass eine Dampfbildung leicht vollständig verhindert werden kann. Wie man Figur 3 entnehmen kann, ist es möglich, die maximale Speichertemperatur unter 100°C durch entsprechende Mengen-Dosierung an Verdampfungsfluid zu senken, ohne dass dem Nutzer energetische Nachteile erwachsen.

**Beispiel 2 Flachkollektor mit Wärmerohr-Wärmeausleitung**

Nachfolgend wird von einem Flachkollektor mit Wärmerohr-Wärmeausleitung ausgegangen. Auch hier werden die Ergebnisse auf die Bruttofläche eines Kollektors bezogen.

| | |
|---|---|
| Solare Einstrahlung | 1000 W/m$^2$ |
| Länge einer Absorber-Fläche | 1,42 m |
| Stärke der Absorber-Fläche (Kupfer) | 0,3 mm |

(fortgesetzt)

| | |
|---|---|
| Abstand zwischen den Wärmerohren | 0,08 m |
| Anzahl der Wärmerohre | 16 |
| Gesamtbreite der Absorber-Fläche | 1,28 m |
| Gesamtabsorber-Fläche | 1,818 m² |
| Brutto-Fläche des Kollektors | 2 m² |
| Absorptionskoeffizient Absorber-Material,$\alpha$ | 0,93 |
| Transmission durch Deckglas, $\tau$ | 0,91 |
| Wärme-Übertragungswiderstand Absorber- Kondensator (1,4 m Wärmerohr mit Rippen-Kondensator und Aceton-Füllung) | 0,12 K/W |
| Wärme-Übertragungswiderstand Kondensator- Arbeitsfluid | 0,18 K/W |
| Isolationswiderstand des Kollektors (auf eine Finne bezogen) | 2,65 K/W |

Das Ergebnisdiagramm ist in Figur 4 dargestellt. Es zeigt sich, dass der abschaltende Flachkollektor vor allem bei relativ geringen Temperaturdifferenzen günstig anzuwenden ist.

**Beispiel 3: Wärmestrom durch Wärmeleitung im Metall**

Für die Berechnung der Größe des Wärmestromes durch Wärmeleitung im Metall des Wärmerohres geht man davon aus, dass der größte Teil der Absorber-Fläche und des Verdampfers sich auf Stagnationstemperatur also im Strahlungsgleichgewicht von eingestrahlter und abgestrahlter Leistung befinden. In der Nähe des Sammlers kann allerdings ein kleiner Wärmestrom von der Absorberfläche über das Metall von Absorber und Verdampfer durch die Isolation des Sammlers in die Umwelt fließen und die Absorber-Fläche kühlen.

Der Wärmestrom wird örtlich als Exponentialfunktion gemäß Gleichung (5) beschrieben:

$$P = Gs * \alpha * \tau * b * \int_0^{6*\tau x} (e^{\frac{-x}{\tau x}}) * dx \qquad \text{(Gl. 5)}$$

mit

Gs   solare Einstrahlung,
$\alpha$   Absorptionskoeffizient,
$\tau$   Transmission,
b   Breite des Absorber-Blechs,
$\tau x$   Wegkonstante,
x   Ortsvariable

Unbekannt ist die Wegkonstante $\tau x$. Sie wird berechnet, indem man für freigewählte $\tau x$ den Temperaturabfall im Bereich des Absorbers ermittelt:

$$\theta stagx = \theta u + P * (Riso + Rv) + \Delta\theta \qquad \text{(Gl. 6)}$$

mit

$\theta u$   Umgebungstemperatur,
Riso   Isolationswiderstand des Sammlers,
Rv   thermischer Widerstand des Verbindungskanales + Widerstand des Übergangskegels,

wobei $\Delta\theta$ sich aus Beziehung (7 Gl) berechnen lässt:

$$\Delta\theta = r * Gs * \alpha * \tau g * b * \int_0^{6*\tau x} x * (e^{\frac{-x}{\tau x}}) * dx \qquad \text{(Gl. 7)}$$

mit

*r*  spezifischer, längenbezogener Wärmewiderstand des Absorbers mit Verdampfer.

Die Lösung ergibt sich über die Wahl von $\tau x$. Dabei wird $\tau x$ so lange variiert bis $\theta stagx$ gleich der bekannten Stagnationstemperatur $\theta stag$ ist. Mit dem nun bekanntem $\tau x$ wird der Wärmestrom im Metall des Wärmerohres mittels Gleichung (Gl. 5) berechnet.

Die Wegkonstante $\tau x$ liegt bei einem 10 x 0,4 mm Cu-Rohr mit einer Absorber-Breite von 50 mm bei einer Stärke von 0,12 mm bei 140 mm, so dass ein Wärmestrom bis aus 450 mm (etwa 3 * $\tau x$) Entfernung gebildet wird. Der verbleibende Teil des Absorbers liegt auf Stagnationstemperatur von ca. 300°C und trägt nicht zum Wärmestrom im Metall des Wärmerohres bei.

Bei den genannten Dimensionen ergibt sich je nach Ausführung ein Wärmestrom, der nicht dem Wärmetransport über Phasenwechsel entspringt von 5-6 W, so dass es bei üblicher Isolierung des Sammlers nur zu einer Temperaturanhebung durch diesen Wärmestrom kommt, wenn die Abschalttemperatur, $\theta ab$, deutlich unter 100°C liegt.

*BEZUGSZEICHENLISTE*

| | |
|---|---|
| 1 | Absorber-Blech |
| 2 | Verdampfer |
| 3 | Kondensator |
| 4 | Verbindungskanal |
| 5 | Sammler |
| 6 | Steckhülse |
| | |
| 7 | Absorber-Fläche pro m$^2$ Bruttofläche des Kollektors |
| $\tau$ | Transmissionsgrad des Hüllrohres |
| $\tau x$ | Wegkonstante |
| x | ortsabhängige Variable |
| *a* | Absorptionskoeffizient |
| b | Breite Absorber-Fläche |
| $\varepsilon a$ | Emissionskoeffizienten für Absorberflächen |
| $\varepsilon c$ | Emissionskoeffizienten für Kupferflächen |
| *Aa* | Absorberfläche pro m$^2$ Bruttofläche |
| *Ac* | Kupferfläche pro m$^2$ Bruttofläche |
| *Ta* | absolute Absorber-Temperatur |
| $\theta a$ | relative Absorber-Temperatur |
| *Tu*, | absolute Umgebungstemperatur |
| $\theta u$ | relative Umgebungstemperatur |
| $\theta f$ | Arbeitsfluid- |
| $\theta s$ | Sammlertemperatur |
| $\theta ab$ | Abschalttemperatur des Sammlers - kein Wärmestrom über den Zwei-Phasen-Prozess zum Sammler |
| $\theta k$ | Knicktemperatur |
| $\theta stag$ | Stagnationstemperatur des Absorbers bzw. des Verdampfers |
| $\theta stagx$ | Hilfsstagnationstemperatur für Berechnung |
| Gs | Globalstrahlungsleistung W/m$^2$ |
| 6 | Strahlungskoeffizient |
| *Pa* | vom Absorber absorbierte Leistung |
| *Pstv* | vom Absorber abgestrahlte Leistung |
| *P* | Differenz aus absorbierter Leistung zu abgestrahlter Leistung |
| *Pn* | Nutzleistung / m$^2$ Bruttofläche |
| *Pnt* | Nutzleistung in der Austrocknungszone |
| *Piso* | Verlustleistung Sammler zur Umgebung |
| *Rak* | Wärme-Übertragungs-Widerstand von Absorber zur Kondensatoroberfläche |
| *Rkf* | Wärme-Übertragungs-Widerstand von Kondensator zum Arbeitsfluid |
| *Riso* | Isolationswiderstand des Sammlers |
| *r* | auf Länge bezogener Widerstand des Metalls von Verdampfer und Absorber des Wärmerohres |

**Patentansprüche**

1. Abschaltender solar-thermischer Kollektor mit Wärmerohren zum Sammeln thermischer Energie der Sonne, dessen Wärmeübertragung von den Absorber-Flächen zum Arbeitsfluid im Sammlerrohr des Kollektors über Wärmerohre erfolgt und eine Abschaltung, die Verhinderung einer weiteren Wärmezufuhr zum Sammler, dadurch realisiert wird, in dem die Menge des Verdampfungsfluides in den einzelnen Wärmerohren, vorzugsweise wird ein geeignetes organisches Fluid genutzt, so bemessen ist, dass bei der Abschalttemperatur, der Temperatur bei der in den Wärmerohren gerade die gesamte Menge des Verdampfungsfluides in den Wärmerohren in die Dampfphase übergegangen ist und folglich die Wärmerohre ausgetrocknet sind und deshalb auch keine Energie über die Zwei-Phasen-Reaktion des Verdampfungsfluides mehr dem Arbeitsfluid im Sammler zuführen können,
der **dadurch gekennzeichnet ist, dass**
die Differenz zwischen der Knicktemperatur, der Temperatur bei der der Austrocknungsvorgang der Heatpipe und damit der Leistungs-senkende Effekt für den Kollektor beginnt und der Abschalttemperatur, auf unter 25 K reduziert ist, was eine vorteilhafte steile Abschaltung innerhalb eines kleinen Temperaturbereiches bedeutet, wobei die Summe der Wärme-Übertragungswiderstände zwischen den Verdampfern der Wärmerohre und dem Arbeitsfluid im Sammler dadurch minimiert ist, indem Wärmerohre und Sammler hoher Wärme-Übertragungsleistung bei niedrigem Temperaturabfall eingesetzt sind , wobei ein Gesamtleitwert der Übertragung Verdampfer-Arbeitsfluid einer Absorber-Wärmerohr- Einheit von 3,35 K/W nicht unterschritten werden bzw. ein Gesamtwiderstand einer Absorber-Wärmerohr-Einheit von 0,3 K/W nicht überschritten werden sollte.

2. Abschaltender solar-thermischer Kollektor nach Anspruch 1
**dadurch gekennzeichnet, dass**
die Übertragungsoberfläche bzw. der thermische Kontakt zwischen der Wärmquelle und dem Verdampfungsfluid durch ein geeignetes Fügeverfahren wie
ein Schweißverfahren, Lötung oder ein mechanisches Fügeverfahren angemessen groß, so dass der thermische Widerstand zwischen der die Wärme aufnehmenden Oberfläche und dem Verdampfer-Fluid vernachlässigbar klein ist, wobei auch
die Querschnitte, die das verdampfte Fluid, bei der Wärmeübertragung vom Verdampfer zum Kondensator durchströmen, so bemessen sind, dass auch der durch den Druckabfall bewirkte thermische Widerstand zwischen Verdampfer und Kondensator 0,05 K/W nicht überschreitet.

3. Abschaltender solar-thermischer Kollektor nach Ansprüchen 1 und 2
**dadurch gekennzeichnet, dass**
als Verdampfungsfluid in den Wärmerohren ein thermisch und chemisch stabiles organisches Verdampfungsfluid dient, dass Eigenschaften wie gute Wärmeleitfähigkeit, geringe Viskosität und eine relativ große Verdampfungsenthalpie aufweist, um den thermischen Widerstand des Wärmerohres zu minimieren welches gleichzeitig bei einer je nach Anwendung festzulegenden Abschalttemperatur, zwischen 90 °C und 180 °C vollständig dampfförmig vorliegt, was durch eine genau bemessene Masse des Verdampfungsfluides ermöglicht wird, wobei n-Pentan, Aceton oder Methanol anzuwenden sind.

4. Abschaltender solar-thermischer Kollektor nach Ansprüchen 1 bis 3
**dadurch gekennzeichnet, dass**
die inneren Oberflächen der Kondensatoren, beispielsweise durch Ausbildung von Rippen innerhalb der Kondensatoren so vergrößert sind, dass das an den Innenflächen der Kondensatoren kondensierende Verdampfungsfluid nur dünne Schichten bildet und ungestört zurück in die Verdampfer fließen kann und die Kondensationsoberflächen ausreichend groß sind, um in Verbindung mit dem gewählten Verdampfungsfluid einen Gesamtwärme-Übertragungswiderstand zu erhalten, der vorzugsweise 0,15 K/W pro Wärmerohr nicht überschreitet.

5. Abschaltender solar-thermischer Kollektor nach Ansprüchen 1 bis 4
**dadurch gekennzeichnet,**
**dass** die thermischen Gesamtübertragungs-Widerstände der Kondensatoren zum Arbeitsfluid 0,2 K/W pro Wärmerohr nicht überschreiten, in dem der Kondensator aus gut wärmeleitendem Material gefertigt ist, und seine Wärmeübertragende Außenoberfläche angemessen ausgeformt ist, wobei der Kondensator in das Sammler-Hauptrohr quer hineinragt und damit direkt vom Arbeitsmedium umspült wird und der Volumenstrom im Zusammenwirken mit einem Sammler angemessener Geometrie eine Reynoldszahl zwischen 1000 und 3000 erreicht und damit einen guten Wärmeübergang in das Arbeitsfluid ermöglicht.

6. Abschaltender solarthermischer Kollektor nach Ansprüchen 1 bis 4

**dadurch gekennzeichnet,**

**dass** bei einer Trockenanbindung der Kondensatoren im Sammler die Gesamttoleranz zwischen den Steckhülsen und den Kondensatoren unter 0,1 mm liegt, wobei

der Restspalt zwischen den Kondensatoren und den Hülsen mit einer nicht aushärtenden Wärmeleitpaste auf Basis von Graphit und einem mineralischen Öl mit niedrigem Dampfdruck zu mindestens 40% gefüllt ist, so dass der thermische

Gesamtübertragungs-Widerstand Kondensator-Arbeitsfluid für den Wärmestrom einer Absorber- Wärmerohr-Einheit von 0,2 K/W nicht überschreitet.

7. Abschaltender solarthermischer Kollektor nach Ansprüchen 2 bis 4

**dadurch gekennzeichnet, dass**

die Wärmerohrkondensatoren und der Sammler durch ein unlösbares, gut die Wärme leitendes Fügeverfahren verbunden sind.

Figur 1

Figur 2

Figur 3

## Figur 4

Europäisches
Patentamt
European
Patent Office
Office européen
des brevets

**EUROPÄISCHER RECHERCHENBERICHT**

Nummer der Anmeldung

EP 14 00 2034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2008 007647 U1 (NARVA LICHTQUELLEN GMBH & CO K [DE]) 14. August 2008 (2008-08-14) | 1,2,4-7 | INV. F24J2/32 F24J2/46 |
| Y | * Absatz [0001] * * Absatz [0031] * ----- | 3 | |
| X | EP 2 455 682 A2 (NARVA LICHTQUELLEN GMBH & CO KG [DE]) 23. Mai 2012 (2012-05-23) | 1,2,4-7 | |
| Y | * Seite 9, Zeile 48 - Zeile 52 * ----- | 3 | |
| Y | EP 2 065 658 A1 (HOCHSCHULE FUER TECHNIK RAPPER [CH]) 3. Juni 2009 (2009-06-03) * Absatz [0024] * ----- | 3 | |

**RECHERCHIERTE SACHGEBIETE (IPC)**

F24J
F28D

Der vorliegende Recherchenbericht wurde für alle Patentansprüche erstellt

| Recherchenort | Abschlußdatum der Recherche | Prüfer |
|---|---|---|
| Den Haag | 10. November 2014 | Vesselinov, Vladimir |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 00 2034

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-11-2014

| Im Recherchenbericht angeführtes Patentdokument | Datum der Veröffentlichung | Mitglied(er) der Patentfamilie | Datum der Veröffentlichung |
|---|---|---|---|
| DE 202008007647 U1 | 14-08-2008 | KEINE | |
| EP 2455682 A2 | 23-05-2012 | DE 102010052103 A1<br>EP 2455682 A2 | 24-05-2012<br>23-05-2012 |
| EP 2065658 A1 | 03-06-2009 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19919835 A1
- EP 1970642 A2
- DE 2008038733 B4
- AT 300972
- DE 0069102856 T2
- DE 20108682 U1
- DE 202008007647 U1
- DE 102010052103 A1